# EUROPEAN PATENT SPECIFICATION

(11) **EP 2 134 454 B1**
(45) Date of publication and mention of the grant of the patent: **28.08.2013**
(21) Application number: 08733323.3
(22) Date of filing: 04.04.2008
(51) Int. Cl.: B01D 63/02, B01D 65/02, B01D 63/04

(54) **HOLLOW FIBRE MEMBRANE MODULE WITH PROTECTION SCREEN**
HOHLFASERMEMBRANMODUL MIT SCHUTZGITTER
MODULE MEMBRANAIRE A FIBRES CREUSES AVEC TAMIS DE PROTECTION

(30) Priority: 04.04.2007 AU 2007901821 P
(43) Date of publication of application: 23.12.2009
(73) Proprietor: Siemens Industry, Inc., Alpharetta, GA 30005-4437 (US)
(72) Inventor: JOHNSON, Warren, Thomas, Grose Wold, NSW 2753 (AU); BECK, Thomas, William, North Richmond, NSW 2756 (AU); ZHA, Fufang, West Ryde, NSW 2114 (AU)
(74) Representative: Hazzard, Alan David
(86) International application number: PCT/AU2008/000491
(87) International publication number: WO 2008/122083

(56) References cited:
- WO-A1-2004/018084
- WO-A1-2005/046849
- DE-C1- 10 045 227
- US-A1- 2004 188 341
- US-B1- 6 555 005

## Description

### TECHNICAL FIELD

The invention relates to membrane filtration modules having one or more hollow permeable membranes mounted therein and more particularly to protection for such membrane modules.

### BACKGROUND OF THE INVENTION

During the membrane filtration process, foreign particles / materials contained in the feed approach the membrane surface and are caught in the membrane module. Those particles cause membrane fouling and can clog membrane modules. Liquid backwash, air scouring and chemical cleaning are common means to remove the fouled materials. However, the membrane modules still often suffer from packing by fibrous materials or damage by sharp materials or objects. Typically fibrous materials or trash may be caught around membranes and inside the membrane groups or bundles when wastewater or mixed liquor from a biological system is filtered. Another example is the seawater pre-treatment with membrane filtration where sharp shells from sea water often cause damage to membranes.

Different methods have been proposed to protect the membrane modules from damage by foreign materials and objects. Pre-screen of feed is a common method to protect membrane modules from damage by large size materials. In membrane bioreactors, a screen with perforated mesh is inserted between the biological tank and the membrane tank to protect the membranes and modules. In this arrangement, a large screen has to be used and special aerators need to be installed to clean the screen.

One known method of protecting membranes includes holding a bundle of capillaries together with an open sleeve or casing, such as disclosed in US 2004/0188341 A1. The coarse materials, like hair, are filtered by the sleeve so that these materials can not intrude into the inner section of the membrane bundle. However, the method neglects a fact that the materials smaller than the openings can pass through the open sleeve, move towards the membrane surface and inner fibre bundles, and agglomerate around and inside the fibre bundles. It is difficult for these materials to be removed out of the open sleeve. Gradually these materials accumulate inside

the membrane bundle and on the inner surface of the sleeve and the bundles eventually become packed with these materials.

WO 2004/018084 A1 disclosed a sleeve comprising a middle section which is impervious to gas bubbles and has upper and lower larger perforations. However gas is supplied from the sides which can thus not optimally distribute in the bundle.

### SUMMARY OF THE INVENTION

It is an object of the present invention to overcome or ameliorate at least one of the disadvantages of the prior art, or to provide a useful alternative.

According to one aspect, the present invention provides filtration systems for removing fine solids from a liquid suspension as defined in the appended claims.

According to another aspect, the present invention provides a method for filtering a feed liquid, as defined in the appended claims.

Some module arrangements have holes in the lower potting head for providing feed liquid to the membranes that may bypass a screen provided around the membranes. Although the low pressure drop across the screen due to its larger surface area means that most of the feed flow will still be screened, an additional screen can be fitted across the holes below the module, if required.

In one embodiment, the feed liquid is provided, at least in part, through a port in said module and fouling material is withdrawn through said port, said port having a selectively operable screen arranged such that feed flowing into said module is screened and fouling material flowing from said module is not screened.

By adding a fine mesh to the membrane module it is possible to provide a screen surface, which can provide a relatively large screen at a modest cost, without the need for external capital equipment. In the case of a membrane arrangements using aeration scouring to clean the membranes within the module, the aeration process normally used to clean the module, may also vibrate the screen, and dislodge any material therefrom that has accumulated. Dislodged material leaves the system through the normal drain-down process. So in addition to a backwashable screen, there is no need for a separate screens handling system as required in the prior art.

It will be appreciated by those skilled in the art that the present invention may be used with pressurised modules, membrane bioreactor modules, submerged modules or any variations thereof. The invention may also be applied to racks of modules rather than to the separate modules that make up the rack, by enclosing the rack of modules in the screen material.

### BRIEF DESCRIPTION OF THE DRAWINGS

Preferred embodiments of the invention will now be described, by way of example only, with reference to the accompanying drawings in which:
FIG. 1 shows a simplified cross-sectional elevation view of one embodiment of a membrane module in accordance with the present invention;
FIG. 2 shows a simplified cross-sectional elevation view of another embodiment of a membrane module in accordance with the present invention
FIG. 3 shows a simplified cross-sectional elevation view of another embodiment of a membrane module in accordance with the present invention;
FIG. 4 shows a simplified cross-sectional elevation view of a membrane module, not in accordance with the present invention;
FIG. 4A shows a sectional plan view taken along line 4A-4A of FIG. 4;
FIGS 5A and 5B show a simplified cross-sectional elevation view of another membrane module, not in accordance with the present invention; and
FIG. 6 shows a simplified cross-sectional elevation view of another embodiment of a membrane module in accordance with the present invention.

### DESCRIPTION OF PREFERRED EMBODIMENTS

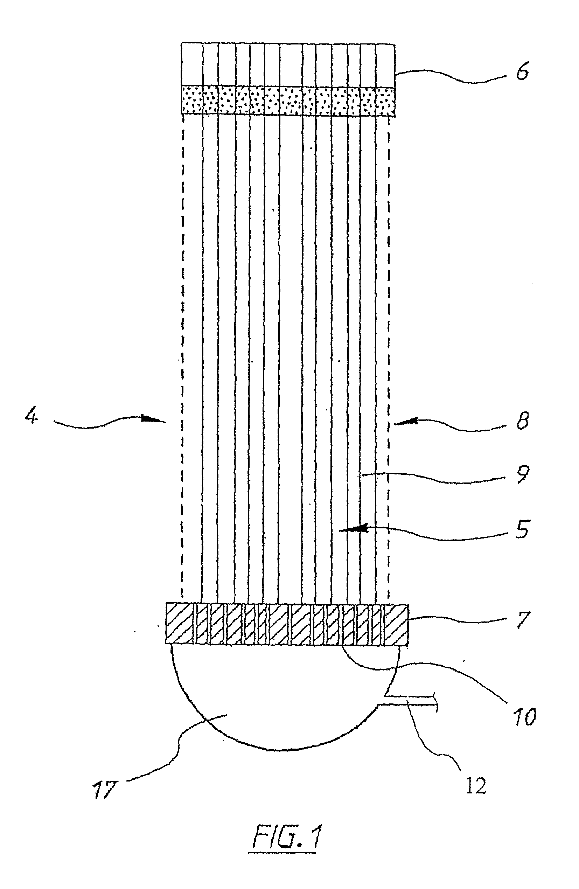

Referring to FIG. 1, the membrane module 4, according to this embodiment, comprises an array or bundle of hollow fibre membranes 5 extending longitudinally between upper and lower potting heads 6 and 7. A fine screen mesh 8 surrounds the array 5 and provides an initial screening of feed entering the module 4 while also serving to hold the fibres 9 in close proximity to each other and prevent excessive movement. The fibres 9 are open at the upper potting head 6 to allow for filtrate removal from their lumens and sealed at the lower potting head 7. The lower potting head 7 has a number of holes 10 uniformly distributed therein to enable gas/air to be supplied therethrough from a feed line 12 and plenum chamber 17 located below the aeration holes 10. The fibres are fixed uniformly within the potting heads 6 and 7 and the holes 10 are formed uniformly relative to each fibre 9 so as to provide, in use, a uniform distribution of gas bubbles between the fibres.

In use, the module 4 is arranged vertically in a feed tank (not shown). During filtration the filtrate is withdrawn from the top potting head 6 and filtrate collection chamber 11 through suction applied to the open ends of the membrane lumens. The suction produces a pressure differential across the membrane walls resulting in feed liquid being drawn from the feed tank through the screen 8 and into contact with the hollow fibre membranes 9. The screen 8 has apertures dimensioned to remove coarse contaminant matter within the feed liquid prior to its application to the membranes.

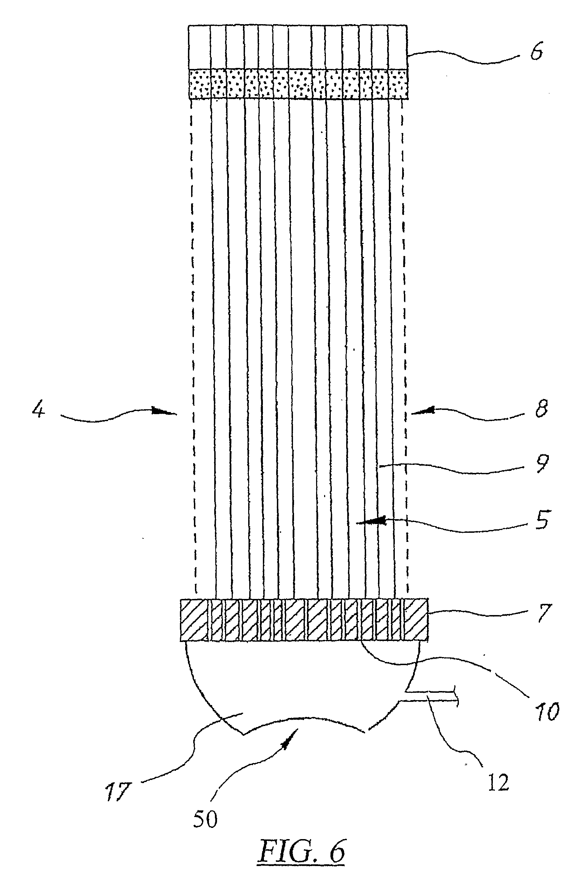

FIG. 6 illustrates an embodiment similar to that of FIG. 1, however plenum chamber 17 includes an aperture 50 formed beneath the feed line 12. In the present example, the aperture extends generally horizontally. In this embodiment, feed enters the membrane module primarily through the screen 8, and to a lesser extent through aperture 50. This feed is then applied to the fibres 9 in the usual manner. Concentrate and other solids/trash accumulated within the module 4 is able to egress via the aperture 50 either of its own accord under gravitational influence, or by virtue of gas bubble scouring, backwashing flows, drain down of the tank, or the like. To this end, it will be appreciated that the location of the aperture 50 does not substantively inhibit the ability to supply of gas/air through the feed line 12 for the purpose of bubble scouring.

Although this embodiment suffers some decrease in effectiveness due to the ingress of coarse contaminant matter through the aperture 50 (which is not protected by screen 8), this is generally balanced from a performance/practical perspective by advantages stemming from the free flow of concentrate and waste (including coarse contaminant matter) outwardly through aperture 50, typically during the backwash process.

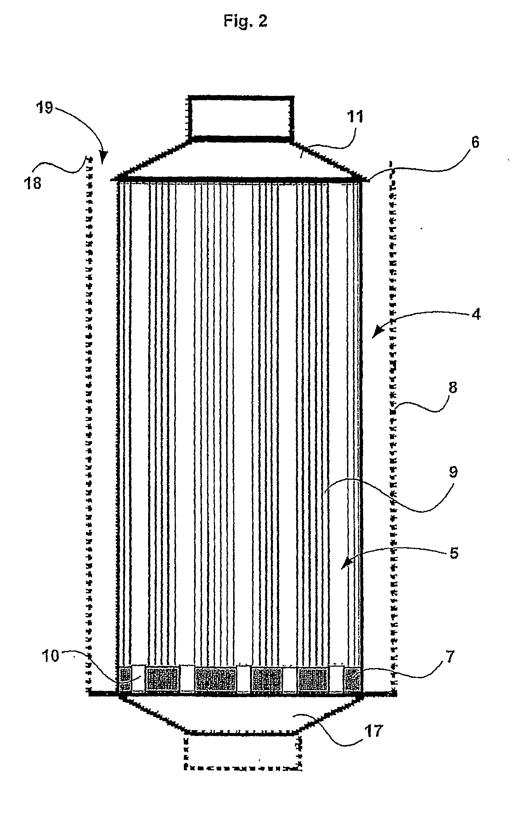

Figure 2 shows a further embodiment of the invention where the screen 8 is spaced from the periphery of the module 4 while extending the full length of the module 4. The screen is attached to the lower potting head 7 but open at its upper end 18 adjacent the upper potting head 6 to define a gap 19. In use, feed flows through the screen 8 into contact with the membranes 9 mounted in the module 4. Concentrate produced during filtration, gas bubble scouring and backwashing flows out through the gap 19.

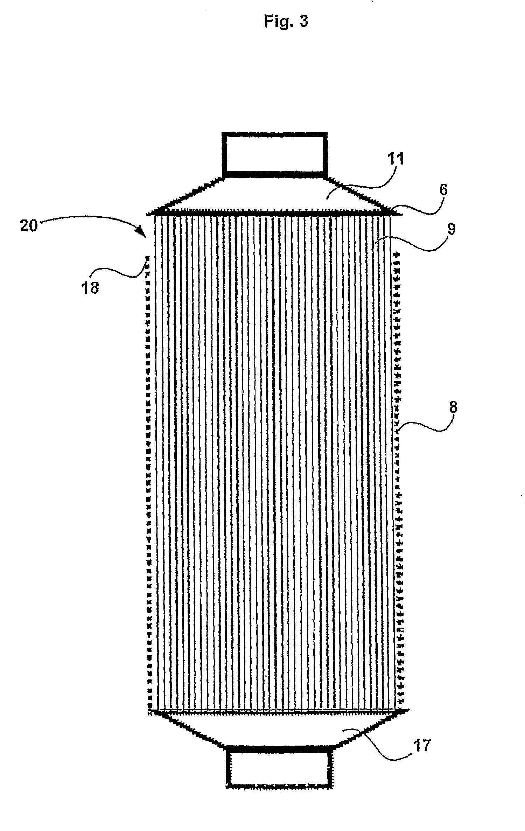

Figure 3 shows a similar embodiment to that of Figure 2, however, in this embodiment, the screen 8 does not extend fully to the upper potting head 6 and a gap or opening 20 is provided between the end 18 of the screen 8 and the upper potting head 6. This opening 20 again allows concentrate to flow therethrough.

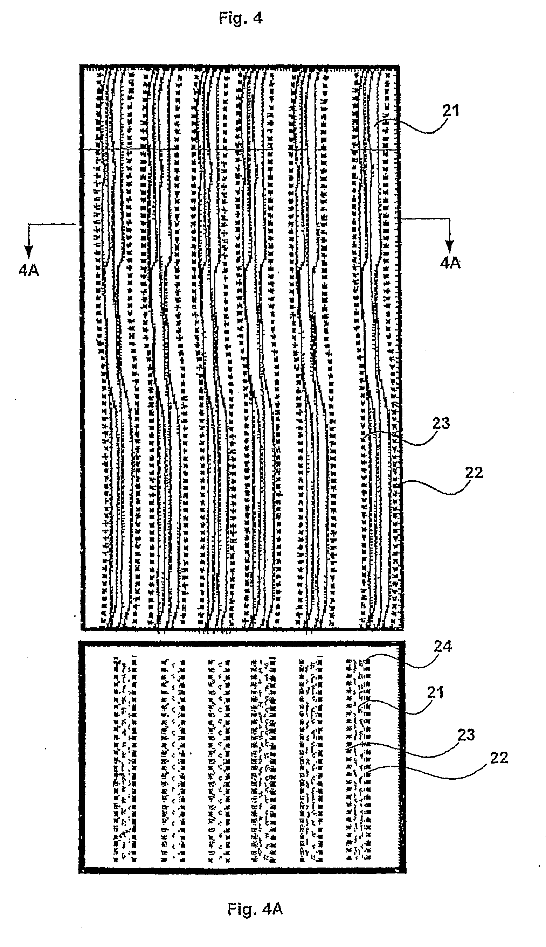

Figures 4 and 4A show a membrane module where fibre membrane mats 21 are used in the module. In this arrangement each mat 21 is provided with coextensive protection screens 22 and 23 which are provided on each side of each mat 21 and extend between the upper and lower potting heads 6 and 7. As best shown in Figure 4A, the screens 22 and 23 are open adjacent the edges 24 of the mats 21 to allow outward flow of concentrate.

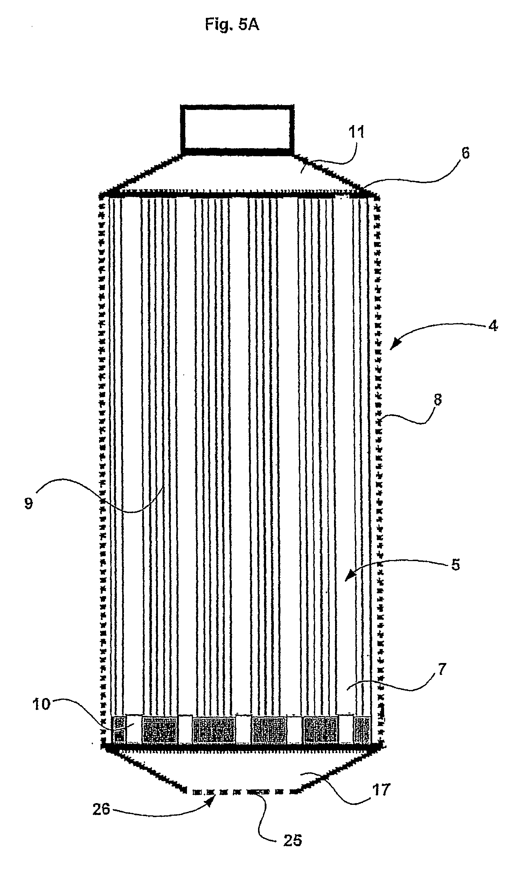

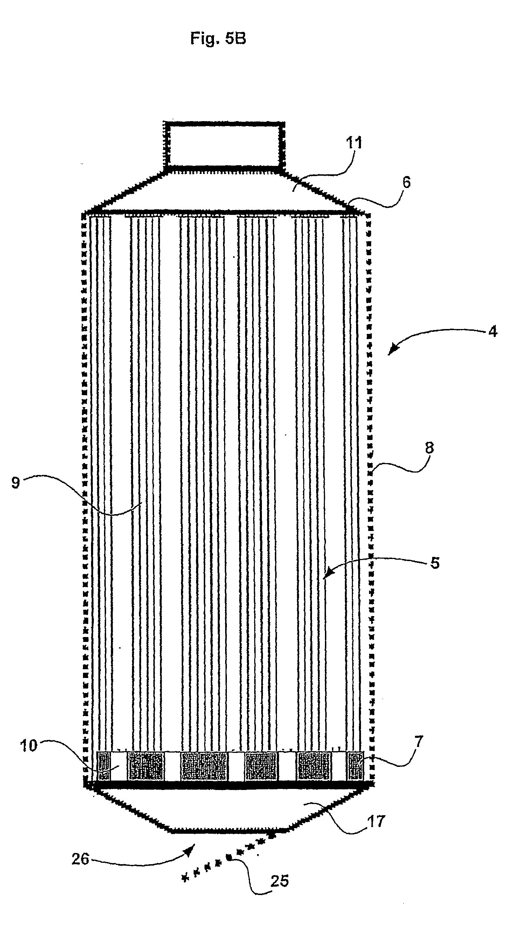

Figures 5A and 5B show a further membrane module where a selectively operable screen 25 is provided across a feed entry port 26. Feed enters the membrane module through the port 26 and flows through screen 25 into the membrane module 4 where it is applied to the membranes 9 in the usual manner. When concentrate and other solids/trash accumulated within the module 4 is required to be removed, the screen 25 is opened as shown in Figure 5B to allow free flow of concentrate and waste from the module 4 through port 26. It will be appreciated a similar effect could be achieved by having an inflow path which is screened and an outflow path which is unscreened. Similarly, other portions of the screen 8 could be provided with selectively operable openings to provide a similar advantageous operation.

Gas, typically air, is introduced into the bottom of the module 4 through holes 10, producing gas bubbles between fibres to scrub solids accumulated on membrane surfaces. The gas bubbles also result in vibrating and scouring of the screen 8 to remove accumulated screening therefrom. When the feed tank is drained following a backwash, the screenings dislodged from the screen 8 are also removed.

The gas bubble cleaning process and method may be used in conjunction with any standard backwashing regimes including liquid backwashing, pressurised gas backwashing, combinations of both, as well as with chemical cleaning and dosing arrangements.

The gas bubble cleaning process would normally be used in conjunction with the backwash stage, however, it may also be used continually during the filtration and backwash stages. Cleaning chemicals such as chlorine may be added to the gas providing the bubbles to further assist the cleaning process. Solids removed in the cleaning process may be intermittently or continually removed.

Screen aperture dimensions are chosen to reject debris entering the membrane module, but allow gas to escape during the gas bubble cleaning process. For finer screens a gas vent can be provided instead of relying on the gas passing out through the screen. The screen can be formed of self-supported hard material or a flexible material that allows swaying of the screen during the gas-bubbling cleaning process.

It will be appreciated that further embodiments and exemplifications of the invention are possible without departing from the scope of the invention as defined in the appended claims.

## Claims

1. A filtration system comprising:
a membrane module (4) comprising a plurality of permeable hollow-fibre membranes (5), each of the membranes (9) having an upper end and a lower end, the membranes having said ends extending from and mounted to respective upper (6) and lower (7) potting heads,
said membrane module (4) having an upper end and a lower end, wherein the upper end of said module comprises said upper potting head (6);
a screen (8) connected to and extending from said lower potting head (7), said screen (8) surrounding the membranes (9) and extending between said upper end and said lower end of said membrane module,
wherein the hollow membrane fibres (9) are substantially uniformly mounted in the lower potting head (7) relative to a distributed array of aeration holes (10) in the lower potting head, wherein the aeration holes are sized and located such that bubbles, formed by a gas passing therethrough when the module is immersed in a liquid, pass substantially uniformly between the fibres
**characterized in that** an aperture size of the screen is between about 625 µm² to about 25 x 10⁶ µm²; and **in that**
a gap (19, 20) is provided between the upper end of the screen and the upper potting head.

2. A filtration system according to claim 1 wherein said gap is provided by peripherally spacing an end (18) of said screen from said upper end of the module.

3. A filtration system according to claim 1, wherein said gap (20) is provided by the screen (8) which does not extend fully to the upper potting head (6) and the gap (20) is provided between the end (18) of the screen (8) and the upper potting head (6).

4. A filtration system according to any preceding claim wherein the aperture size is between about 1 x 10⁴ µm² to about 1 x 10⁶ µm².

5. A filtration system according to any preceding claim wherein the membranes are sealed at the lower end and open at the upper end to allow removal of a filtrate.

6. A filtration system according to any preceding claim wherein the fibres are arranged in close proximity to one another and mounted in a bundle (5) in a substantially taut manner between the upper potting head (6) and the lower potting head (7) to prevent excessive movement therebetween.

7. A filtration system according to any preceding claim wherein the vessel includes a plenum chamber (17) beneath the lower potting head (7) through which the gas is introduced, and wherein the plenum chamber includes an aperture (50; 26) substantially beneath the aeration holes for allowing egress of contaminants.

8. A filtration system according to any preceding claim wherein the lower potting head (7) is connected (12) to a source of pressurized gas, and the fibres (9) and screen (8) are arranged to be vibrated by the gas bubbles.

9. A method for filtering a feed liquid, the method comprising:
- providing a membrane module (4) comprising a plurality of permeable hollow-fibre membranes (5), each of the membranes (9) having an upper end and a lower end, the membranes having said ends extending from and mounted to respective upper (6) and lower (7) potting heads,
said membrane module (4) having an upper end and a lower end, wherein the upper end of said module comprises said upper potting head (6);
- providing a screen (8) connected to and extending from said lower potting head (7), said screen (8) surrounding the membranes (9) and extending between said upper end and said lower end of said membrane module, wherein an aperture size of the screen is between about 625 µm² to about 25 x 10⁶ µm²;
and a gap (19, 20) is provided between the upper end of the screen
and the upper potting head; wherein the hollow membrane fibres (9) are substantially uniformly mounted in the lower potting head (7)
relative to a distributed array of aeration holes (10) in the lower potting head,
said method comprising the steps of immersing the module in a liquid, and passing bubbles of a gas through the aeration holes (10) such that the bubbles pass substantially uniformly between the hollow membrane fibres (9).

10. A method for filtering a feed liquid according to claim 9 wherein said opening is provided by peripherally spacing an end (18) of said screen from said upper end of the module.

11. A method for filtering a feed liquid according to claim 9 wherein said gap (20) is provided by the screen (8) which does not extend fully to the upper potting head (6) and said gap or opening (20) is provided between the end (18) of the screen (8) and the upper potting head (6).

12. A method for filtering a feed liquid according to claim 9 wherein the hollow membrane fibres (9) are mounted in a header in close proximity to one another so as to prevent excessive movement therebetween.

## Patentansprüche

1. Filtrationssystem, welches umfasst:
ein Membranmodul (4), das eine Vielzahl von durchlässigen Hohlfasermembranen (5) umfasst, wobei jede der Membranen (9) ein oberes Ende und ein unteres Ende aufweist, wobei sich die Membranen, die diese Enden aufweisen, von einem oberen (6) bzw. unteren (7) Kopfstück aus erstrecken und an diesen Kopfstücken befestigt sind,
wobei das Membranmodul (4) ein oberes Ende und ein unteres Ende aufweist, wobei das obere Ende des Moduls das obere Kopfstück (6) umfasst;
ein Gitter (8), das mit dem unteren Kopfstück (7) verbunden ist und sich von diesem aus erstreckt, wobei das Gitter (8) die Membranen (9) umgibt und sich zwischen dem oberen Ende und dem unteren Ende des Membranmoduls erstreckt,
wobei die Hohlmembranfasern (9) im Wesentlichen gleichmäßig in dem unteren Kopfstück (7) bezüglich einer verteilten Anordnung von Belüftungslöchern (10) in dem unteren Kopfstück angebracht sind, wobei die Belüftungslöcher so bemessen und angeordnet sind, dass sich Blasen, die von einem durch sie hindurchströmenden Gas gebildet werden, wenn das Modul in eine Flüssigkeit eingetaucht wird, im Wesentlichen gleichmäßig zwischen den Fasern hindurchbewegen,
**dadurch gekennzeichnet, dass** eine Öffnungsgröße des Gitters zwischen etwa 625 µm² und etwa 25 x 10⁶ µm² beträgt; und
dadurch, dass ein Zwischenraum (19, 20) zwischen dem oberen Ende des Gitters und dem oberen Kopfstück vorgesehen ist.

2. Filtrationssystem nach Anspruch 1, wobei der Zwischenraum vorgesehen wird, indem ein Ende (18) des Gitters entlang des Umfangs in einem Abstand von dem oberen Ende des Moduls angeordnet wird.

3. Filtrationssystem nach Anspruch 1, wobei der Zwischenraum (20) durch das Gitter (8) vorgesehen ist, welches sich nicht ganz bis zu dem oberen Kopfstück (6) erstreckt, und der Zwischenraum (20) zwischen dem Ende (18) des Gitters (8) und dem oberen Kopfstück (6) vorgesehen ist.

4. Filtrationssystem nach einem der vorhergehenden Ansprüche, wobei die Öffnungsgröße zwischen etwa 1 x 10⁴ µm² und etwa 1 x 10⁶ µm² beträgt.

5. Filtrationssystem nach einem der vorhergehenden Ansprüche, wobei die Membranen an dem unteren Ende abgedichtet und an dem oberen Ende offen sind, um das Entfernen eines Filtrats zu ermöglichen.

6. Filtrationssystem nach einem der vorhergehenden Ansprüche, wobei die Fasern in unmittelbarer Nähe zueinander angeordnet und in einem Bündel (5) im Wesentlichen straff zwischen dem oberen Kopfstück (6) und dem unteren Kopfstück (7) angebracht sind, um eine übermäßige Bewegung zwischen ihnen zu verhindern.

7. Filtrationssystem nach einem der vorhergehenden Ansprüche, wobei das Gefäß eine Luftkammer (17) unter dem unteren Kopfstück (7) enthält, durch welche das Gas eingeleitet wird, und wobei die Luftkammer eine Öffnung (50; 26) im Wesentlichen unterhalb der Belüftungslöcher aufweist, um den Auslass von Schadstoffen zu ermöglichen.

8. Filtrationssystem nach einem der vorhergehenden Ansprüche, wobei das untere Kopfstück (7) mit einer Quelle von Druckgas verbunden (12) ist und die Fasern (9) und das Gitter (8) dafür eingerichtet sind, durch die Gasblasen in Schwingung versetzt zu werden.

9. Verfahren zum Filtern einer Speiseflüssigkeit, wobei das Verfahren umfasst:
- Bereitstellen eines Membranmoduls (4), das eine Vielzahl von durchlässigen Hohlfasermembranen (5) umfasst, wobei jede der Membranen (9) ein oberes Ende und ein unteres Ende aufweist, wobei sich die Membranen, die diese Enden aufweisen, von einem oberen (6) bzw. unteren (7) Kopfstück aus erstrecken und an diesen Kopfstücken befestigt sind,
wobei das Membranmodul (4) ein oberes Ende und ein unteres Ende aufweist, wobei das obere Ende des Moduls das obere Kopfstück (6) umfasst;
- Bereitstellen eines Gitters (8), das mit dem unteren Kopfstück (7) verbunden ist und sich von diesem aus erstreckt, wobei das Gitter (8) die Membranen (9) umgibt und sich zwischen dem oberen Ende und dem unteren Ende des Membranmoduls erstreckt, wobei eine Öffnungsgröße des Gitters zwischen etwa 625 µm² und etwa 25 x 10⁶ µm² beträgt; und ein Zwischenraum (19, 20) zwischen dem oberen Ende des Gitters und dem oberen Kopfstück vorgesehen ist; wobei die Hohlmembranfasern (9) im Wesentlichen gleichmäßig in dem unteren Kopfstück (7) bezüglich einer verteilten Anordnung von Belüftungslöchern (10) in dem unteren Kopfstück angebracht sind,
wobei das Verfahren die Schritte des Eintauchens des Moduls in eine Flüssigkeit und des Hindurchleitens von Blasen eines Gases durch die Belüftungslöcher (10), sodass sich die Blasen im Wesentlichen gleichmäßig zwischen den Hohlmembranfasern (9) hindurchbewegen, umfasst.

10. Verfahren zum Filtern einer Speiseflüssigkeit nach Anspruch 9, wobei die Öffnung vorgesehen wird, indem ein Ende (18) des Gitters entlang des Umfangs in einem Abstand von dem oberen Ende des Moduls angeordnet wird.

11. Verfahren zum Filtern einer Speiseflüssigkeit nach Anspruch 9, wobei der Zwischenraum (20) durch das Gitter (8) vorgesehen wird, welches sich nicht ganz bis zu dem oberen Kopfstück (6) erstreckt, und dieser Zwischenraum oder diese Öffnung (20) zwischen dem Ende (18) des Gitters (8) und dem oberen Kopfstück (6) vorgesehen wird.

12. Verfahren zum Filtern einer Speiseflüssigkeit nach Anspruch 9, wobei die Hohlfasermembranen (9) in einem Kopfstück in unmittelbarer Nähe zueinander angeordnet werden, um eine übermäßige Bewegung zwischen ihnen zu verhindern.

## Revendications

1. Système de filtration comprenant
un module membranaire (4) comprenant une pluralité de membranes perméables à fibres creuses (5), chacune des membranes (9) comportant une extrémité supérieure et une extrémité inférieure, lesdites extrémités des membranes s'étendant depuis, et étant montées sur, des têtes d'enrobage respectivement supérieure (6) et inférieure (7) ;
ledit module membranaire (4) comportant une extrémité supérieure et une extrémité inférieure, l'extrémité supérieure dudit module comprenant ladite tête d'enrobage supérieure (6) ;
un tamis (8) relié à, et s'étendant depuis, ladite tête d'enrobage inférieure (7), ledit tamis (8) entourant les membranes (9) et s'étendant entre ladite extrémité supérieure et ladite extrémité inférieure dudit module membranaire,
étant entendu que les fibres membranaires creuses (9) sont montées sensiblement uniformément dans la tête d'enrobage inférieure (7) par rapport à un agencement distribué de trous d'aération (10) dans la tête d'enrobage inférieure, les trous d'aération étant dimensionnés et situés de telle sorte que les bulles formées par un gaz les traversant lorsque le module est immergé dans un liquide, passent sensiblement uniformément entre les fibres,
**caractérisé en ce qu'**une ouverture de mailles du tamis se situe entre environ 625 µm² et environ 25 x 10⁶ µm², et
**en ce qu'**un intervalle (19, 20) est prévu entre l'extrémité supérieure du tamis et la tête d'enrobage supérieure.

2. Système de filtration selon la revendication 1 dans lequel on ménage ledit intervalle en espaçant à la périphérie une extrémité (18) dudit tamis par rapport à ladite extrémité supérieure du module.

3. Système de filtration selon la revendication 1, dans lequel ledit intervalle (20) est ménagé par le tamis (8) qui ne s'étend pas complètement jusqu'à la tête d'enrobage supérieure (6) et l'intervalle (20) est ménagé entre l'extrémité (18) du tamis (8) et la tête d'enrobage supérieure (6).

4. Système de filtration selon l'une quelconque des revendications précédentes dans lequel l'ouverture de mailles se situe entre environ 1 x 10⁴ µm² et environ 1 x 10⁶ µm².

5. Système de filtration selon l'une quelconque des revendications précédentes dans lequel les membranes sont scellées à l'extrémité inférieure et ouvertes à l'extrémité supérieure pour permettre l'enlèvement d'un filtrat.

6. Système de filtration selon l'une quelconque des revendications précédentes dans lequel les fibres sont agencées très proches l'une de l'autre et montées en un faisceau (5) d'une manière sensiblement tendue entre la tête d'enrobage supérieure (6) et la tête d'enrobage inférieure (7) pour éviter des mouvements excessifs entre elles.

7. Système de filtration selon l'une quelconque des revendications précédentes dans lequel le récipient comprend une chambre de distribution (17) en dessous de la tête d'enrobage inférieure (7) par laquelle le gaz est introduit, et dans lequel la chambre de distribution comprend une ouverture (50 ; 26) sensiblement en dessous des trous d'aération pour permettre la sortie de contaminants.

8. Système de filtration selon l'une quelconque des revendications précédentes dans lequel la tête d'enrobage inférieure (7) est reliée (12) à une source de gaz sous pression et les fibres (9) et le tamis (8) sont agencés pour que les bulles de gaz les fassent vibrer.

9. Procédé de filtration d'un liquide d'alimentation, le procédé consistant :
- à réaliser un module membranaire (4) comprenant une pluralité de membranes perméables à fibres creuses (5), chacune des membranes (9) comportant une extrémité supérieure et une extrémité inférieure, lesdites extrémités des membranes s'étendant depuis, et étant montées sur, des têtes d'enrobage respectivement supérieure (6) et inférieure (7),
ledit module membranaire (4) comportant une extrémité supérieure et une extrémité inférieure, l'extrémité supérieure dudit module comprenant ladite tête d'enrobage supérieure (6) ;
- à réaliser un tamis (8) relié à, et s'étendant depuis, ladite tête d'enrobage inférieure (7), ledit tamis (8) entourant les membranes (9) et s'étendant entre ladite extrémité supérieure et ladite extrémité inférieure dudit module membranaire, étant entendu qu'une ouverture de mailles du tamis se situe entre environ 625 µm² et environ 25 x 10⁶ µm² et qu'un intervalle (19, 20) est ménagé entre l'extrémité supérieure du tamis et la tête d'enrobage supérieure, étant entendu que les fibres membranaires creuses (9) sont montées sensiblement uniformément dans la tête d'enrobage inférieure (7) par rapport à un agencement distribué de trous d'aération (10) dans la tête d'enrobage inférieure, ledit procédé comprenant les étapes consistant à immerger le module dans un liquide et à faire passer des bulles de gaz par les trous d'aération (10) de telle sorte que les bulles passent sensiblement uniformément entre les fibres membranaires creuses (9).

10. Procédé de filtration d'un liquide d'alimentation selon la revendication 9 dans lequel on ménage ladite ouverture en espaçant à la périphérie une extrémité (18) dudit tamis par rapport à ladite extrémité supérieure du module.

11. Procédé de filtration d'un liquide d'alimentation selon la revendication 9, dans lequel l'intervalle (20) est ménagé par le tamis (8) qui ne s'étend pas complètement jusqu'à la tête d'enrobage supérieure (6) et ledit intervalle ou ladite ouverture (20) est ménagé entre l'extrémité (18) du tamis (8) et la tête d'enrobage supérieure (6).

12. Procédé de filtration d'un liquide d'alimentation selon la revendication 9 dans lequel les fibres membranaires creuses (9) sont montées très proches l'une de l'autre dans une tête de sorte à éviter des mouvements excessifs entre elles.
